# EUROPÄISCHE PATENTSCHRIFT

(11) **EP 2 079 911 B1**
(45) Veröffentlichungstag und Bekanntmachung des Hinweises auf die Patenterteilung: **14.12.2011**
(21) Anmeldenummer: 07821073.9
(22) Anmeldetag: 09.10.2007
(51) Int. Cl.: F02D 9/10

(54) **DROSSELKLAPPENSTUTZEN**
THROTTLE FLAP CONNECTING PIECE
TUBULURE DE CLAPET D'ÉTRANGLEMENT

(30) Priorität: 10.10.2006 DE 102006048179
(43) Veröffentlichungstag der Anmeldung: 22.07.2009
(73) Patentinhaber: Continental Automotive GmbH, 30165 Hannover (DE)
(72) Erfinder: KÖHLER, Stefan, 60437 Frankfurt (DE)
(86) Internationale Anmeldenummer: PCT/EP2007/060704
(87) Internationale Veröffentlichungsnummer: WO 2008/043754

(56) Entgegenhaltungen:
- EP-A- 0 272 373
- DE-A1- 19 714 717
- US-A- 5 081 972

## Beschreibung

Die Erfindung bezieht sich auf einen Drosselklappenstutzen mit einem Gehäuse, in dem eine durchgehende Durchgangsöffnung ausgebildet ist, die durch eine auf einer Drosselklappenwelle angeordneten und mit dieser verbundenen Drosselklappe runden Querschnitts verschließbar ist, wobei die Drosselklappenwelle mit ihren seitlichen Enden in Lagerausnehmungen des Gehäuses um eine Drehachse schwenkbar gelagert ist, wobei der radial umlaufende Rand der Drosselklappe ringartig ausgebildet ist und eine gegenüber der Dicke der Drosselklappe reduzierte Dicke aufweist, wobei die beiden einander gegenüberliegenden Ringseiten des radial umlaufenden ringartigen Randes der Drosselklappe sich symmetrisch zu einer die Drehachse schneidenden Radialen der Drosselklappenwelle erstrecken.

Bei derartigen Drosselklappenstutzen ist es bekannt, die Drosselklappenwelle mit einer nutartigen Vertiefung zu versehen, in die dann die Drosselklappe eingelegt und durch Schrauben mit der Drosselklappenwelle verbunden wird.

Dabei besitzt die Vertiefung eine derart über die Drehachse der Drosselklappenwelle hinausgehende Tiefe, dass die Drosselklappe sich symmetrisch zu Drehachse radial erstreckt.

Die radial gerichtete Ringfläche der Drosselklappe wird durch Drehen hergestellt.

Dieser Herstellungsvorgang ist zeitaufwendig.

Dies trifft auch auf den Herstellungsvorgang für die nutartige Vertiefung zu, da diese eine große Tiefe besitzt, was einen hohen Materialabtrag erfordert.

Damit ist aber auch die erforderliche Herstellungszeit sowie der Werkzeugverschleiß groß.

Aus der DE 197 14 717 A1 ist ein Drosselklappenstutzen der eingangs genannten Art bekannt. Dabei ist die Drosselklappe derart auf der Drosselklappenwelle befestigt, dass auch der in seiner Dicke nicht reduzierte Bereich der Drosselklappe sich symmetrisch zu der die Drehachse schneidenden Radialen der Drosselklappe erstreckt.

Aufgabe der Erfindung ist es einen Drosselklappenstutzen der eingangs genannten Art zu schaffen, der diese Nachteile vermeidet und eine verringerte Gefahr der Verschmutzung und Eisbildung sowie Blockierung der Drosselklappe an ihrem radial umlaufenden Umfangsbereich aufweist.

Aus der US-5081972 ist ein Droselklappenstutzen bekannt in dem, die Drosselklappe auf einer sich in Längserstreckung der Drosselklappenwelle an der Drosselklappenwelle ausgebildeten Abflachung in Auflage und mit der Drosselklappenwelle verbunden ist, wobei der radial umlaufende ringartige Rand der Drosselklappe eine einseitige Axialprägung der Drosselklappe auf der der Abflachung der Drosselklappenwelle abgewandten Seite der Drosselklappe ist.

Durch diese Ausbildung ergibt sich eine geringe Herstellungszeit für den radial umlaufenden ringartigen Rand.

Dabei kann die radiale Tiefe der Abflachung in der Drosselklappewelle reduziert und damit nur geringeren Materialabtrag benötigend ausgebildet sein, da nicht die Dicke der Drosselklappe in ihrem mittleren Befestigungsbereich sondern nur in ihren Bereich des Randes dazu berücksichtigt werden muss.

Die symmetrische Erstreckung der beiden Ringseiten des ringartigen Randes führt zu einem einwandfreien Schließvorgang der Durchgangsöffnung.

Dabei gewährleistet die größere Dicke der Drosselklappe in ihrem mittleren Bereich eine hohe Stabilität der Drosselklappe, während der radial umlaufende ringartige Rand aufgrund seiner geringeren Dicke zu einer geringeren Ansammlung von Schmutz und Feuchtigkeit in diesem Randbereich führt, so dass sich entsprechend auch die Möglichkeit einer Eisbildung und daraus resultierend eine Blockierung der Drosselklappe verringert.

Weiterhin ist durch die Verwendbarkeit eines normalen Fräswerkzeugs zur Erzeugung der Abflachung diese einfach herstellbar.

Vorzugsweise weist der umlaufende ringartige Rand der Drosselklappe eine Dicke in der Größenordnung von etwa 1 mm auf.

Die Drosselklappe kann außerhalb des radial umlaufenden ringartigen Randes eine Dicke in der Größenordnung zwischen annähernd 1,5 mm und 3 mm aufweisen.

In kurzen Taktzeiten ist die Drosselklappe dadurch herstellbar, dass die Drosselklappe ein Stanzbauteil ist.

Ist die radial gerichtete umlaufende Ringfläche des ringartigen Randes reduzierter Dicke eine Stanzfläche, so ist aufgrund der geringeren Materialdicke im Randbereich der prozentuale Anteil des Glattschnitts gegenüber dem Anteil des Stanzabrisses sehr groß, wodurch die Möglichkeit einer Ansammlung von Schmutz und Feuchtigkeit in diesem Bereich weitgehend eliminiert ist.

Ist die Stanzfläche eine Repassierstanzfläche (Präzisionsstanzfläche), wobei der Repassierstanzvorgang nach der Erzeugung des radial umlaufenden Randes erfolgt, so wird ein Glattschnittanteil von annähernd 100 % an der radial gerichteten umlaufenden Ringfläche des ringartigen Randes erreicht.

Die Abflachung der Drosselwelle kann eine Aufnahmenut bilden, die eine über die Drehachse der Drosselklappenwelle hinaus reichende Tiefe aufweist.

Dabei ist vorzugsweise der von dem ringartigen Rand umschlossene Bereich der Drosselklappe flächig ausgebildet.

Die Aufgabe der Erfindung wird dadurch gelöst, dass die Abflachung tangential auf einer Seite der Drehachse der Drosselklappenwelle ausgebildet ist, wobei die Drosselklappe einen mittigen, flach auf der Abflachung aufliegenden Anlagebereich besitzt, an den sich einander gegenüberliegend jeweils ein an die Kontur der Drosselklappenwelle anschmiegender viertelrundartiger Bereich anschließt, der in einen zur Drehachse annähernd radialen Klappenbereich übergeht.

Dies erlaubt eine Abflachung von z. B. nur 2 bis 2,5 mm Tiefe, wodurch sich ein besonders niedriger erforderlicher Materialabtrag ergibt.

Ist dabei der Anlagebereich der Drosselklappe sich quer zur und/oder in Längserstreckung der Drosselklappenwelle größer als die Abflachung der Drosselklappenwelle, so ist ein Verschieben der vormontierten Drosselklappe auf der Drosselklappenwelle zu Montagezwecken und einer Selbstzentrierung der Drosselklappe im Drosselklappenstutzen möglich.

In einfacher Weise ist die Drosselklappe durch eine oder mehrere zur Drosselklappenwelle radiale Schrauben an der Drosselklappenwelle befestigbar, die durch Bohrungen in der Drosselklappe hindurchragen und in Gewindebohrungen der Drosselklappenwelle eingeschraubt sind.

Ist dabei der Durchmesser der Bohrungen größer ist als der Durchmesser der Schrauben, so ermöglicht dies auf einfache Weise das Verschieben der vormontierten Drosselklappe, bevor sie endgültig mit der Drosselklappenwelle fest verbunden wird.

Ausführungsbeispiele der Erfindung sind in der Zeichnung dargestellt und werden im Folgenden näher beschrieben. Es zeigen
- Figur 1: eine perspektivische Explosionsansicht eines ersten Ausführungsbeispiels eines Drosselklappen-Stutzens;
- Figur 2: eine Ansicht des Drosselklappenstutzens nach Figur 1;
- Figur 3: einen Schnitt entlang der Linie I - I in Figur 2;
- Figur 4: einen Schnitt entlang der Linie II - II in Figur 2;
- Figur 5: einen vergrößerten Ausschnitt "X" aus Figur 4;
- Figur 6: eine perspektivische Explosionsansicht eines zweiten Ausführungsbeispiels eines Drosselklappenstutzens;
- Figur 7: eine Ansicht des Drosselklappenstutzens nach Figur 6;
- Figur 8: einen Schnitt entlang der Linie III - III in Figur 7;
- Figur 9: einen Schnitt entlang der Linie IV - IV in Figur 7;
- Figur 10: einen vergrößerten Ausschnitt "Y" aus Figur 9.

Die dargestellten Drosselklappenstutzen für einen Luftansaugkanal eines Kraftfahrzeugs weisen ein Gehäuse 1 mit einer durchgehenden Durchgangsöffnung 2 auf, die durch eine Drosselklappe 3, 3' verschließbar ist.

Die Drosselklappe 3, 3' ist an einer Drosselklappenwelle 4, 4' angeordnet, die sich quer zur Durchgangsöffnung 2 erstreckt und mit ihren seitlichen Enden 5 in Lagerausnehmungen 6 des Gehäuses 1 ragen und um eine Drehachse 2 schwenkbar gelagert sind.

Mit der Drosselklappenwelle 4, 4' ist die Drosselklappe 3, 3' aus zwischen einer in Durchströmrichtung der Durchgangsöffnung 2 gerichteten Offenstellung und einer quer zur Durchgangsöffnung 2 gerichteten Schließstellung um die Drehachse 7 schwenkbar antreibbar.

Die Drosselklappenwelle 4 weist eine Abflachung 8, 8' auf, auf der die Drosselklappe 3, 3' in Auflage und mit der Drosselklappenwelle 3, 3' verbunden ist.

Dazu sind in der Drosselklappe 3, 3' in einem Abstand zueinander zwei Bohrungen 9 ausgebildet, durch die jeweils eine Schraube 10 hindurchragt, die mit ihrem Gewindeschaft 11 in eine entsprechende Gewindebohrung 12 der Drosselklappe 3, 3' eingeschraubt ist, wobei die Schraubenköpfe 13 der Schrauben 10 die Drosselklappe 3, 3' gegen die Drosselklappenwelle 4, 4' pressen.

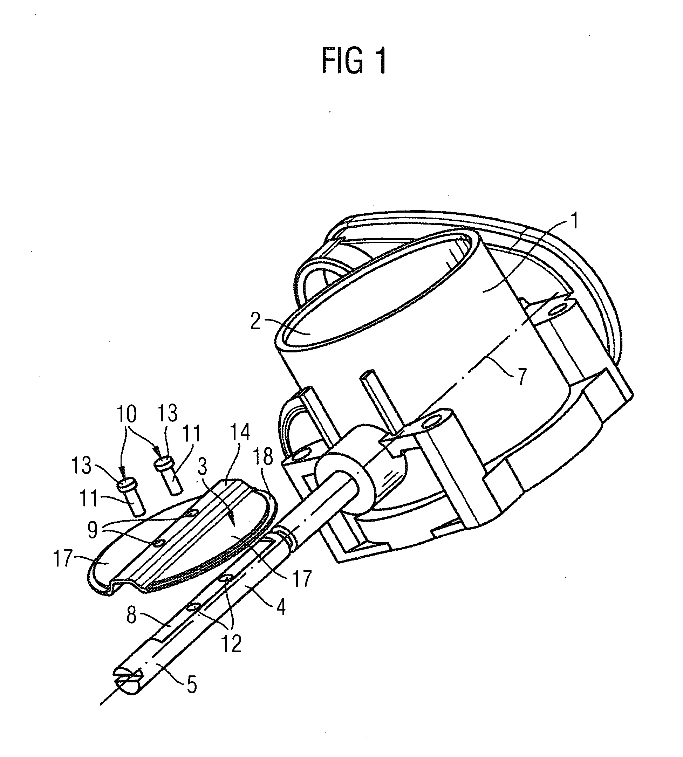

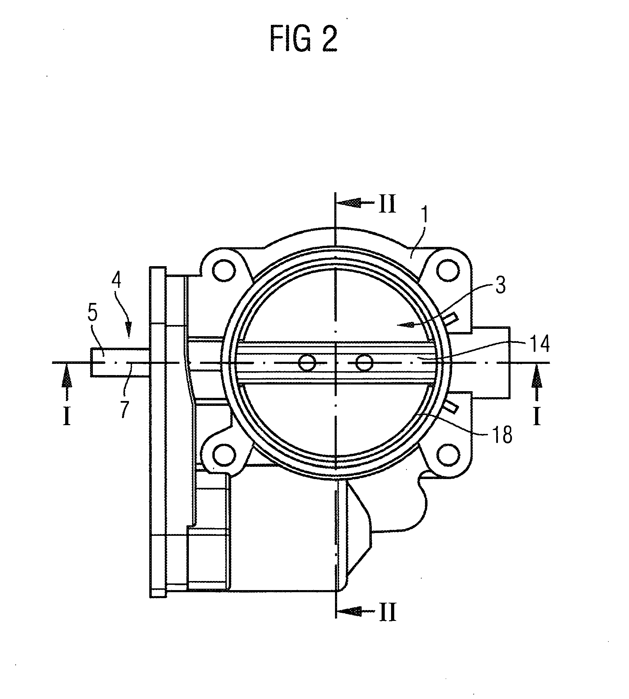

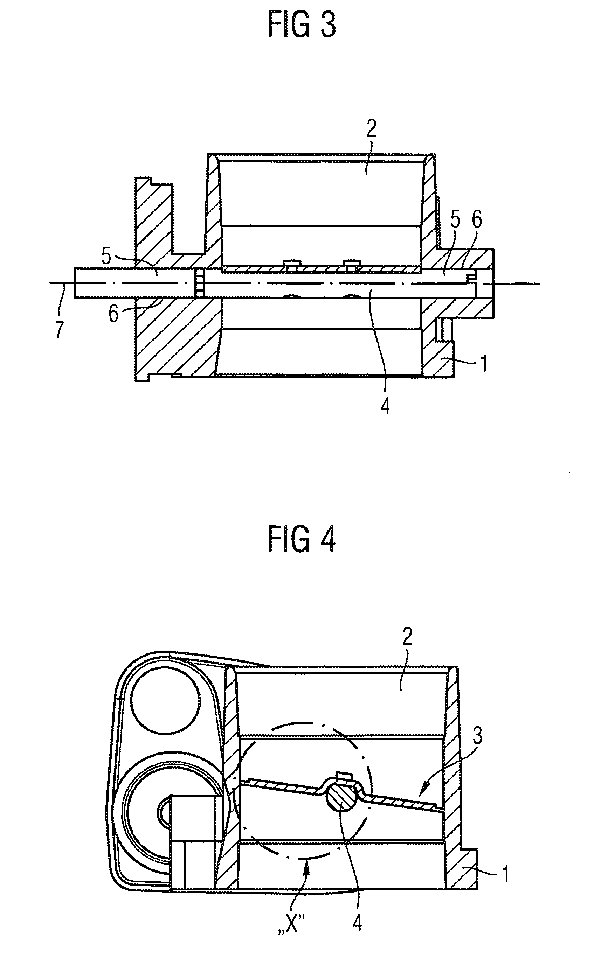

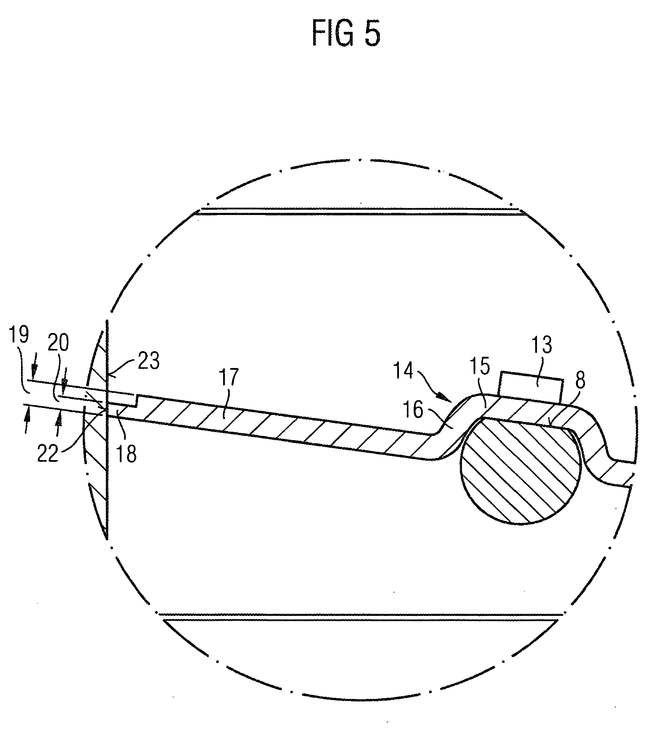

Bei dem Ausführungsbeispiel der Figuren 1 bis 5 ist die Abflachung 8 tangential auf einer Seite der Drehachse 7 der Drosselklappenwelle 4 ausgebildet.

Die Drosselklappe 3 ist ein Stanz-/Biegeteil aus einem Blech und besitzt eine sich diagonal durchgehend erstreckende Sicke 14.

Die Sicke 14 weist einen mittigen, ebenen Anlagebereich 15 etwas größerer Erstreckung quer zur Drosselklappenwelle 4 als der Breite der Abflachung 8 auf.

An den ebenen Anlagebereich 15 schließen sich beidseitig jeweils ein etwa viertelrunder Bereich 16 an, der sich an die Kontur der Drosselklappenwelle 4 etwa anschmiegt.

Diese viertelrunden Bereiche 16 gehen dann in zur Drehachse 7 annähernd radiale Klappenbereiche 17 über.

Mit Ausnahme des Bereichs der Sicke 14 ist ein radial umlaufender Rand 18 an der Drosselklappe 3 ringartig ausgebildet und besitzt eine gegenüber der Dicke 19 des Blechs der Drosselklappe 3 reduzierte Dicke 20.

Dabei ist der ringartige Rand 18 durch eine einseitige Axialprägung auf der der Abflachung 8 der Drosselklappenwelle 4 abgewandten Seite der Drosselklappe 3 gebildet.

Durch den Rand 18 ist der radial äußere Rand der Drosselklappe 3 auf der der Abflachung 8 abgewanden Seite stufig ausgebildet, während die andere Seite der Drosselklappe 3 keine derartige Stufe besitzt.

Der Rand 18 erstreckt sich radial zur Drehachse 7.

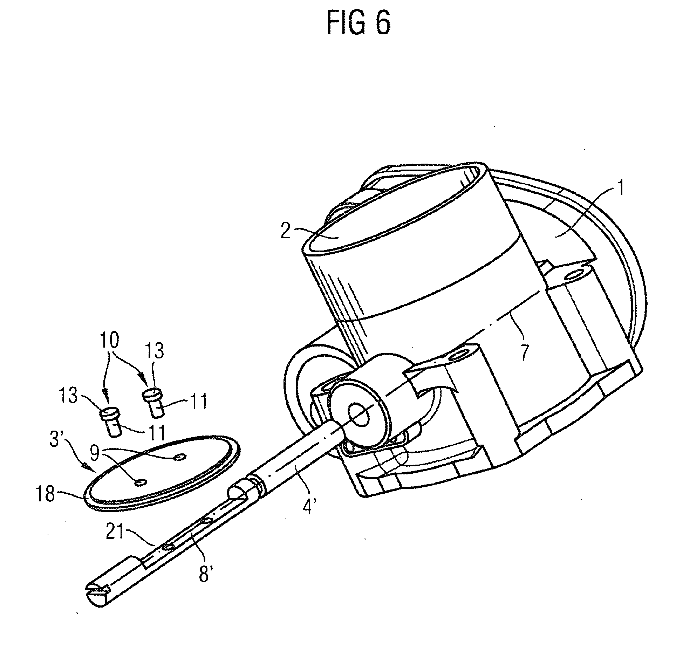

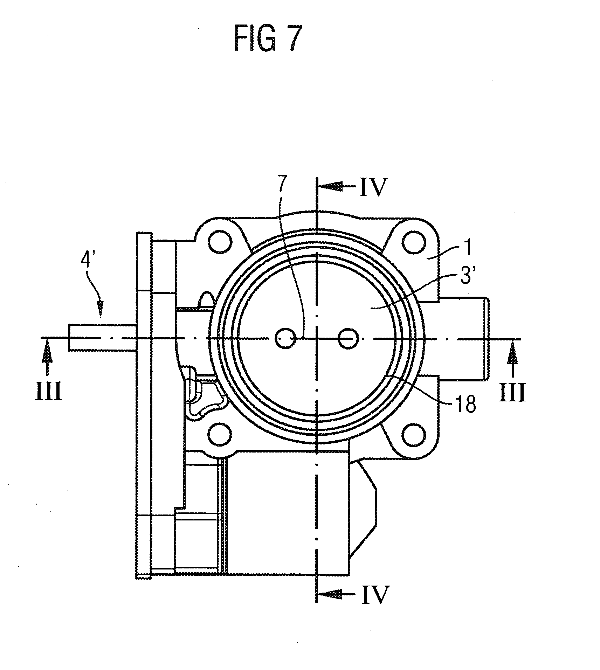

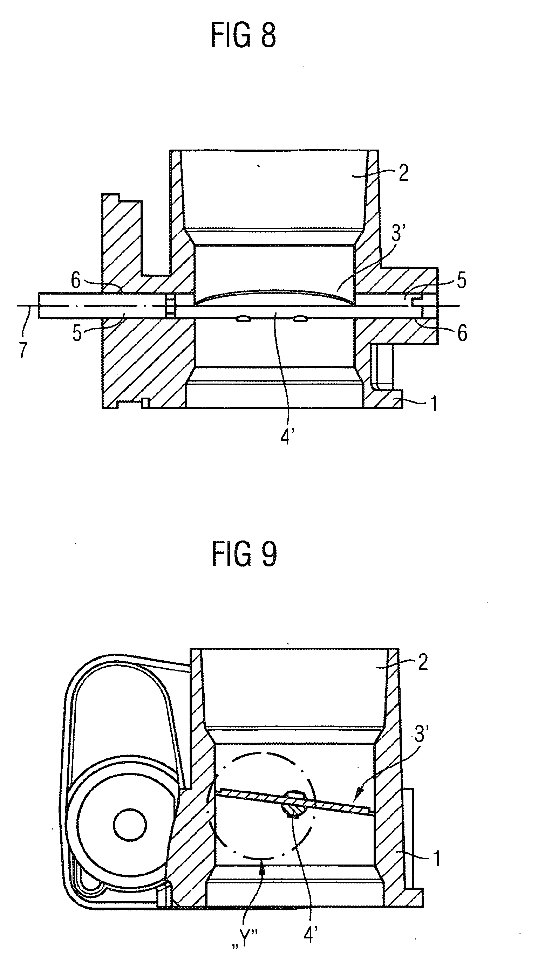

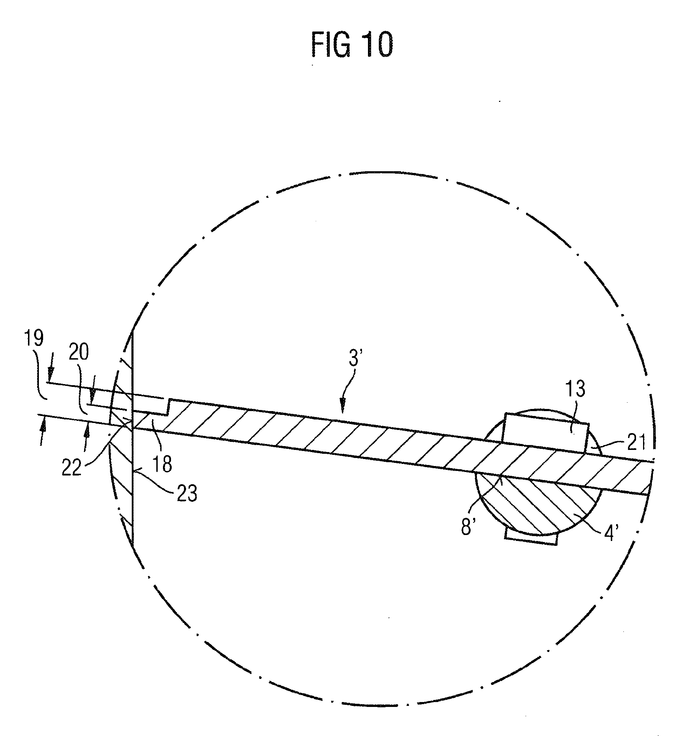

Bei dem Ausführungsbeispiel der Figuren 6 bis 10 bildet die Abflachung 8' eine Aufnahmenut 21 für die Drosselklappe 4', die eine über die Drehachse 7 hinausreichende Tiefe besitzt.

Entsprechend dem Ausführungsbeispiel der Figuren 1 bis 5 besitzt auch das Ausführungsbeispiel der Figuren 6 bis 10 einen radial umlaufenden Rand 18, der eine gegenüber der Dicke 10 des Blechs der Drosselklappe 3' reduzierte Dicke 20 aufweist.

Auch hier ist der ringartige Rand 18 durch eine einseitige Axialprägung auf der der Abflachung 8' der Drosselklappenwelle 4 abgewandten Seite der Drosselklappe 3 stufig ausgebildet, wobei sich der Rand 18 radial zur Drehachse 7 erstreckt.
Die der Abflachung 8' zugewandte Seite der Drosselklappe 3' weist keine derartige Stufe auf.

Zur Montage wird die Drosselklappe 3, 3' auf die Abflachung 8, 8' der bereits in dem Gehäuse 1 montierten Drosselklappenwelle 4, 4' aufgelegt und die durch die Bohrungen 9 hindurchgeführten Schrauben 10 so weit in die Gewindebohrungen 12 eingeschraubt, dass sich die Drosselklappe 3, 3' gerade noch auf der Abflachung 8, 8' verschieben lässt.

Danach erfolgt eine Verschwenkung der Drosselklappe 3, 3' in die Schließstellung, wobei die radial gerichtete umlaufende Ringfläche 22 der Drosselklappe 3, 3' an der zylindrischen Innenwand 23 der Durchgangsöffnung 2 zur Anlage kommt.

Dabei passt die Drosselklappe 3, 3' sich auf der Abflachung 8, 8' verschiebend ihre Position der Durchgangsöffnung 2 an und kann nun in dieser angepassten Position mittels der Schrauben 10 auf der Drosselklappenwelle 4, 4' festgeschraubt werden.

## Patentansprüche

1. Drosselklappenstutzen mit einem Gehäuse (1), in dem eine durchgehende Durchgangsöffnung (2) ausgebildet ist, die durch eine auf einer Drosselklappenwelle (4,4') angeordneten und mit dieser verbundenen Drosselklappe (3,3') runden Querschnitts verschließbar ist, wobei die Drosselklappenwelle (4,4') mit ihren seitlichen Enden in Lagerausnehmungen des Gehäuses um eine Drehachse (7) schwenkbar gelagert ist, wobei der radial umlaufende Rand (18) der Drosselklappe (3,3') ringartig ausgebildet ist und eine gegenüber der Dicke (19) der Drosselklappe (3,3') reduzierte Dicke (20) aufweist, wobei die beiden einander gegenüberliegenden Ringseiten des radial umlaufenden ringartigen Randes 18 der Drosselklappe (3,3') sich symmetrisch zu einer die Drehachse (7) schneidenden Radialen der Drosselklappenwelle (4,4') erstrecken, wobei die Drosselklappe (3,3') auf einer sich in Längserstreckung der Drosselklappenwelle (4,4') an der, Drosselklappenwelle (4,4') ausgebildeten Abflachung (8,8') in Auflage und mit der Drosselklappenwelle (4,4') verbunden ist, wobei der radial umlaufende ringartige Rand (18) der Drosselklappe (3,3') eine einseitige Axialprägung der Drosselklappe (3,3') auf der der Abflachung der Drosselklappenwelle abgewandten Seite der Drosselklappe (3,3') ist **dadurch gekennzeichnet, dass** die Abflachung (8) tangential auf einer Seite der Drehachse (7) der Drosselklappenwelle (4) ausgebildet ist, wobei die Drosselklappe (3) einen mittigen, flach auf der Abflachung (8) aufliegenden Anlagebereich (15) besitzt, an den sich einander gegenüberliegend jeweils ein an die Kontur der Drosselklappenwelle (4) anschmiegender viertelrundartiger Bereich (16) anschließt, der in einen zur Drehachse (7) annähernd radialen Klappenbereich (17) übergeht.

2. Drosselklappenstutzen nach Anspruch 1, **dadurch gekennzeichnet, dass** der umlaufende ringartige Rand (18) der Drosselklappe (3, 3') eine Dicke (20) von etwa 1 mm aufweist.

3. Drosselklappenstutzen nach einem der vorhergehenden Ansprüche, **dadurch gekennzeichnet, dass** die Drosselklappe (3, 3') außerhalb des radial umlaufenden ringartigen Randes (18) eine Dicke (19) zwischen annähernd 1,5 mm und 3 mm aufweist.

4. Drosselklappenstutzen nach einem der vorhergehenden Ansprüche, **dadurch gekennzeichnet, dass** die Drosselklappe (3, 3') ein Stanzbauteil ist.

5. Drosselklappenstutzen nach einem der vorhergehenden Ansprüche, **dadurch gekennzeichnet, dass** die radial gerichtete umlaufende Ringfläche (22) des ringartigen Randes (18) reduzierter Dicke (20) eine Stanzfläche ist.

6. Drosselklappenstutzen nach Anspruch 5, **dadurch gekennzeichnet, dass** die Stanzfläche eine Repassierstanzfläche (Präzisionsstanzfläche) ist.

7. Drosselklappenstutzen nach einem der vorhergehenden Ansprüche, **dadurch gekennzeichnet, dass** die Abflachung (8') der Drosselklappenwelle (4') eine Aufnahmenut (21) bildet, die eine über die Drehachse (7) der Drosselklappenwelle (4') hinaus reichende Tiefe aufweist.

8. Drosselklappenstutzen nach Anspruch 7, **dadurch gekennzeichnet, dass** der von dem ringartigen Rand (18) umschlossene Bereich der Drosselklappe (3') flächig ausgebildet ist.

9. Drosselklappenstutzen nach Anspruch 8, **dadurch gekennzeichnet, dass** der Anlagebereich (15) der Drosselklappe (3) sich quer zur und/oder in Längserstreckung der Drosselklappenwelle (4) größer ist als die Abflachung (8) der Drosselklappenwelle (4).

10. Drosselklappenstutzen nach einem der vorhergehenden Ansprüche, **dadurch gekennzeichnet, dass** die Drosselklappe (3, 3') durch eine oder mehrere zur Drosselklappenwelle (4, 4') radiale Schrauben (10) an der Drosselklappenwelle (4, 4') befestigbar ist, die durch Bohrungen (9) in der Drosselklappe (3, 3') hindurchragen und in Gewindebohrungen (12) der Drosselklappenwelle (4, 4') eingeschraubt sind.

11. Drosselklappenstutzen nach Anspruch 10, **dadurch gekennzeichnet, dass** der Durchmesser der Bohrungen (9) größer ist als der Durchmesser der Schrauben (10).

## Claims

1. Throttle flap connecting piece with a housing (1) in which a continuous passage opening (2) is formed, which passage opening can be closed by a throttle flap (3, 3') of round cross section, which is arranged on a throttle flap shaft (4, 4') and is connected thereto, wherein the throttle flap shaft (4, 4') is mounted pivotably about an axis of rotation (7) with the lateral ends thereof in bearing recesses of the housing, wherein the radially encircling edge (18) of the throttle flap (3, 3') is designed in the manner of a ring and has a thickness (20) which is reduced in comparison to the thickness (19) of the throttle flap (3, 3'), wherein the two mutually opposite ring sides of the radially encircling, ring-like edge (18) of the throttle flap (3, 3') extend symmetrically with respect to a radial, which intersects the axis of rotation (7), of the throttle flap shaft (4, 4'), wherein the throttle flap (3, 3') rests on a flattened portion (8, 8') formed on the throttle flap shaft (4, 4') in the longitudinal extent of the throttle flap shaft (4, 4'), and is connected to the throttle flap shaft (4, 4'), wherein the radially encircling, ring-like edge (18) of the throttle flap (3, 3') is a one-side axial stamping of the throttle flap (3, 3') on that side of the throttle flap (3, 3') which faces away from the flattened portion of the throttle flap shaft, **characterized in that** the flattened portion (8) is formed tangentially on one side of the axis of rotation (7) of the throttle flap shaft (4), the throttle flap (3) having a central contact region (15) which rests flat on the flattened portion (8) and which is adjoined by respective regions (16), which are opposite each other, each region bearing snugly against the contour of the throttle flap shaft (4), being in the manner of a quarter circle and merging into a flap region (17) which is approximately radial to the axis of rotation (7).

2. Throttle flap connecting piece according to Claim 1, **characterized in that** the encircling, ring-like edge (18) of the throttle flap (3, 3') has a thickness (20) of approximately 1 mm.

3. Throttle flap connecting piece according to one of the preceding claims, **characterized in that** the throttle flap (3, 3') has a thickness (19) of between approximately 1.5 mm and 3 mm outside the radially encircling, ring-like edge (18).

4. Throttle flap connecting piece according to one of the preceding claims, **characterized in that** the throttle flap (3, 3') is a punched component.

5. Throttle flap connecting piece according to one of the preceding claims, **characterized in that** the radially directed, encircling ring surface (22) of the ring-like edge (18) of reduced thickness (20) is a punched surface.

6. Throttle flap connecting piece according to Claim 5, **characterized in that** the punched surface is a trimmed punched surface (precision punched surface).

7. Throttle flap connecting piece according to one of the preceding claims, **characterized in that** the flattened portion (8') of the throttle flap shaft (4') forms a receiving groove (21) which has a depth reaching beyond the axis of rotation (7) of the throttle flap shaft (4').

8. Throttle flap connecting piece according to Claim 7, **characterized in that** that region of the throttle flap (3') which is enclosed by the ring-like edge (18) is of planar design.

9. Throttle flap connecting piece according to Claim 8, **characterized in that** the contact region (15) of the throttle flap (3) transversely with respect to and/or in the longitudinal extent of the throttle flap shaft (4) is larger than the flattened portion (8) of the throttle flap shaft (4).

10. Throttle flap connecting piece according to one of the preceding claims, **characterized in that** the throttle flap (3, 3') can be fastened to the throttle flap shaft (4, 4') by one or more screws (10) which are radial with respect to the throttle flap shaft (4, 4'), protrude through bores (9) in the throttle flap (3, 3') and are screwed into threaded bores (12) in the throttle flap shaft (4, 4').

11. Throttle flap connecting piece according to Claim 10, **characterized in that** the diameter of the bores (9) is larger than the diameter of the screws (10).

## Revendications

1. Tubulure de papillon des gaz, comprenant un corps (1) dans lequel est formé une ouverture (2) de passage traversante qui peut être fermée par un volet (3, 3') d'étranglement de section transversale circulaire placé sur un arbre (4, 4') de volet d'étranglement et relié à celui-ci, l'arbre (4, 4') du volet d'étranglement étant monté tournant autour d'un axe (7) de rotation par ses extrémités latérales dans des évidements de palier du corps, le bord (18) s'étendant radialement du volet (3, 3') d'étranglement étant de type annulaire et ayant une épaisseur (20) réduite par rapport à l'épaisseur (19) du volet (3, 3') d'étranglement, dans lequel les deux côtés annulaires opposés l'un à l'autre du bord (18) s'étendant radialement du volet (3, 3') d'étranglement s'étendent de manière symétrique par rapport à un rayon coupant l'axe (7) de rotation de l'arbre (4, 4') du volet d'étranglement, le volet (3, 3') d'étranglement étant appliqué sur un méplat (8, 8') formé sur l'arbre (4, 4') du volet d'étranglement et s'étendant dans la direction longitudinale de l'arbre (4, 4') du volet d'étranglement et étant relié à cet arbre (4, 4') du volet d'étranglement, le bord (18) de type annulaire s'étendant radialement du volet (3, 3') d'étranglement étant un estampage axial d'un côté du volet (3, 3') d'étranglement du côté du volet (3, 3') d'étranglement éloigné du méplat de l'arbre du volet d'étranglement, **caractérisé en ce que** le méplat (8) est formé tangentiellement sur un côté de l'axe (7) de rotation de l'arbre (4) du volet d'étranglement, le volet (3) d'étranglement ayant une zone (15) d'application médiane s'appliquant à plat sur le méplat (8) et à laquelle se raccorde en étant opposée l'une à l'autre respectivement une zone de type à quart de cercle épousant le contour de l'arbre (4) du volet d'étranglement, zone qui se transforme en une zone (17) de volet à peu près radiale par rapport à l'axe (7) de rotation.

2. Tubulure de papillon des gaz suivant la revendication 1, **caractérisée en ce que** le bord (8) de type annulaire faisant le tour du volet (3, 3') d'étranglement a une épaisseur (20) d'environ 1mm.

3. Tubulure de papillon des gaz suivant l'une des revendications précédentes, **caractérisée en ce que** le volet (3, 3') d'étranglement a, à l'extérieur du bord (18) de type annulaire faisant le tour radialement, une épaisseur (19) comprise entre à peu près 1,5 mm et 3 mm.

4. Tubulure de papillon des gaz suivant l'une des revendications précédentes, **caractérisée en ce que** le volet (3, 3') d'étranglement est une pièce découpée.

5. Tubulure de papillon des gaz suivant l'une des revendications précédentes, **caractérisée en ce que** la surface (22) annulaire faisant le tour et dirigée radialement du bord (18) de type annulaire d'épaisseur (20) réduite est une surface découpée.

6. Tubulure de papillon des gaz suivant la revendication 5, **caractérisée en ce que** la surface découpée est une surface découpée repassée (surface découpée de précision).

7. Tubulure de papillon des gaz suivant l'une des revendications précédentes, **caractérisée en ce que** le méplat (8') de l'arbre (4') du volet d'étranglement forme une rainure (21) de réception, qui a une épaisseur allant au-delà de l'axe (7) de rotation de l'arbre (4') du volet d'étranglement.

8. Tubulure de papillon des gaz suivant la revendication 7, **caractérisée en ce que** la zone du volet (3') d'étranglement entourée par le bord (8) de type annulaire est plate.

9. Tubulure de papillon des gaz suivant la revendication 8, **caractérisée en ce que** la zone (15) d'application du volet (5) d'étranglement est plus grande transversalement et/ou dans la direction longitudinale de l'arbre (4) du volet d'étranglement que le méplat (8) de l'arbre (4) du volet d'étranglement.

10. Tubulure de papillon des gaz suivant l'une des revendications précédentes, **caractérisée en ce que** le volet (3, 3') d'étranglement peut être fixé à l'arbre (4, 4') du volet d'étranglement par une ou par plusieurs vis (10) radiales par rapport à l'arbre (4, 4') du volet d'étranglement, vis qui pénètrent dans des trous (9) du volet (3, 3') d'étranglement et sont vissées dans des taraudages (12) de l'arbre (4, 4') du volet d'étranglement.

11. Tubulure de papillon des gaz suivant la revendication 10, **caractérisée en ce que** le diamètre des trous (9) est plus grand que le diamètre des vis (10).
